# EUROPÄISCHE PATENTSCHRIFT

(11) **EP 1 426 699 B1**
(45) Veröffentlichungstag und Bekanntmachung des Hinweises auf die Patenterteilung: **29.08.2007**
(21) Anmeldenummer: 02026777.9
(22) Anmeldetag: 02.12.2002
(51) Int. Cl.: F24D 19/10, F04D 15/00

(54) **Automatische Regelvorrichtung für Umwälzpumpen**
Circulation pumps automatic control system
Dispositif de réglage automatique de pompes de circulation

(43) Veröffentlichungstag der Anmeldung: 09.06.2004
(73) Patentinhaber: Holter, Christian, Dr., 8047 Graz (AT); Zischka, Walter, 7411 Markt Allhau (AT); Lechner, Franz, Ing., 8062 Kumberg (AT); Radovic, Franz, 8200 Gleisdorf (AT)
(72) Erfinder: Holter, Christian, Dr., 8047 Graz (AT); Zischka, Walter, 7411 Markt Allhau (AT); Lechner, Franz, Ing., 8062 Kumberg (AT); Radovic, Franz, 8200 Gleisdorf (AT)
(74) Vertreter: Margotti, Herwig Franz

(56) Entgegenhaltungen:
- EP-A- 0 703 416
- EP-A- 0 834 789
- WO-A-98/00764
- DE-A- 4 312 150
- DE-A- 19 600 455

## Beschreibung

Die Erfindung betrifft eine neue Regelvorrichtung zur automatischen Regelung von Umwälzpumpen, die für den Transport von wärme- und kältetragenden Medien in allen bekannten Wärme- und Kältesystemen benutzt werden kann.

Im Weiteren wird die Funktion der Erfindung für ein Wärmesystem beschrieben. Für ein Kältesystem ist die Funktion identisch in umgekehrter Form.

Eine herkömmliche Umwälzpumpe dient zum Transport eines wärmetragenden Mediums zwischen einer Wärmequelle und einem Wärmespeicher oder Wärmeverbraucher, im folgenden Wärmesenke genannt. Der Transport erfolgt durch zwei Rohrleitungen - ein Zulaufrohr und ein Ablaufrohr. Die Umwälzpumpe wird üblicherweise im Ablaufrohr platziert.

Der Ablauf der Wärmeübertragung wird nach bestimmten verfahrenstechnischen Regeln abgewickelt. Um diese verfahrenstechnische Regel ständig halten zu können, bedarf es einer Regelvorrichtung. Das Ziel der Regelvorrichtung ist es, den Transport der Wärmeenergie zwischen der Wärmequelle und der Wärmesenke so zu regeln, dass, falls in der Wärmesenke zu wenig Wärmeenergie ist, diese aus der Wärmequelle entnommen und in die Wärmesenke transportiert wird. Falls die Wärmesenke energetisch aufgeladen ist und keine weitere Wärmeenergie verbraucht oder gespeichert werden kann, muss der Transport gestoppt werden.

Die Umwälzpumpen werden von einer externen Regelvorrichtung angesteuert, die in einigen Wärmequellen wie z. B. Heizkessel, integriert ist oder in anderen, wie thermischen Solaranlagen als Zusatzgerät aufgestellt wird.

Diese externe Regelvorrichtung verfügt über mehrere externe Temperatursensoren, die in den Wärmequellen und -senken platziert werden und über die Erwärmung des gemessenen wärmetragenden Mediums einem externen Regler Steuerungsinformationen liefern. Die Steuerungsinfommtionen dienen als Basis für die Schaltsignale des externen Reglers, die zur Betriebsregelung der Umwälzpumpe benutzt werden. Der externe Regler wird häufig weit weg von der Umwälzpumpe (z. B. in einer Warte) aufgestellt. Seine Montage, die Montage der externen Temperatursensoren und die Verbindung der beiden erfordert Vorort-Verkabelungen im größeren Umfang, die folgende Nachteile aufweisen:
- Hohe lnstallationskosten im Elektrobereich.
- Nicht ordnungsgemäße Datenlieferung durch falsche oder ungenaue Platzierung von Sensoren.
- Risiko der Unterbrechung der Signalübertragung durch Beschädigung oder Bruch des Kabels.

Der jetzige Stand der Regelung der Umwälzpumpen wird folgenderweise definiert:
- Die Umwälzpumpen werden aufgrund der Temperaturänderungen in der Wärmequelle geregelt.
- Die Regelvorgänge werden durch eine externe Regelvorrichtung durchgeführt.
- Die externe Regelvorrichtung besteht aus einem konventionellen (z. B. mechanischen und / oder elektronischen) externen Regler und aus mehreren externen Temperatursensoren, die in der Wärmequelle und Wärmesenke platziert sind.
- Die externen Temperatursensoren werden mit dem externen Regler durch eine umfangreiche Vorort-Verkabelung verbunden.
- Der externe Regler wird manuell an die Betriebsbedingungen der jeweiligen Anlage eingestellt.

Die EP 0 703 416 A1 offenbart eine Zentralheizungsanlage, die einen Heizkreis sowie eine Umwälzpumpe enthält. Eine signalverarbeitende Anordnung beeinflusst die Förderleistung der Umwälzpumpe in Abhängigkeit von der Differenz zwischen der Vorlauftemperatur und der Rücklauftemperatur. Bei einer Änderung der Förderleistung der Umwälzpumpe ist die Ermittlung einer Druckänderung vorgesehen, die ein ordnungsgemäßes Arbeiten der Umwälzpumpe anzeigt. Anders als in der vorliegenden Erfindung wird die Förderleistung der Umwälzpumpe aufgrund der Druckänderung korrigiert. Es wird jedoch nicht eine Änderung des Druckniveaus infolge der Temperaturänderung der Wärmequelle oder der Wärmesenke zur Bildung eines Einschaltimpulses für die Umwälzpumpe ausgewertet.

Die DE 43 12 150 A1 offenbart ein Verfahren zum Einstellen der Förderleistung einer Umwälzpumpe, die den aus der EP 0 703 416 A1 bekannten Regelmechanismus verwendet, um die Förderleistung der Umwälzpumpe zu regeln. Es werden aus einer Druckänderung jedoch keine Einschaltsignale abgeleitet.

Die EP 0 834 789 A1 offenbart ein selbstregelndes Molorpumpenaggregat für einen Heizungskreislauf. Das Motorpumpenaggregat und seine elektronische Regelung umfassen keine Temperatur- oder Drucksensoren. Vielmehr wird eine von einem Mikrocontroller gelieferte elektrische Einstellspannung einem Soll-Druckwert im Heizkreis gleichgesetzt. Der Mikrocontroller berechnet aus der Anfangsspannung, der Spannungsdifferenz und der Soll-Spannung einen neuen Sollwert für die Drehzahl des Motors, der an einen elektronischen Drehzahlregler gesendet wird.

Die DE 196 00 455 A1 offenbart ein Verfahren und eine Vorrichtung zum Inbetriebsetzen einer Pumpe in einer Zirkulationsleitung. Es soll die Pumpe nur dann in Betrieb gesetzt werden, wenn eine Warmwasserzapfung beginnt. Der Einschaltimpuls für die Pumpe hängt somit von der Warmwasserzapfung ab.

Der vorliegenden Erfindung liegt die Aufgabe zugrunde, eine Lösung bereitzustellen, bei der die Umwälzpumpe durch eine automatische Regelvorrichtung gesteuert wird, die aus einem integrierten Regler und aus internen Sensoren besteht.

Die internen Sensoren werden in der unmittelbaren Nähe des Reglers d. h. außerhalb der Wärmequelle und/oder der Wärmesenke eingebaut werden.

Der integrierte Regler gehört in die Kategorie der intelligenten, so genannten selbstlernenden Regler und arbeitet auf Basis von Fuzzylogik.

Der Prozess des Selbstlernens des integrierten Reglers (4) basiert auf dem Verhältnis zwischen der Temperaturänderung der Wärmequelle (2) und der Druckänderung bei der Umwälzpumpe (3), das für jede Anlage ein charakteristischer Zahlenwert ist.

Der integrierte Regler (4) mit einer selbst errechneten Logik (Fuzzylogik):
- erkennt automatisch den Wert, der als Einschaltkriterium ausreicht und
- korrigiert die Einschaltschwelle.

Die Erkennung erfolgt aufgrund einer Auswertung von
- erfolgreichen bzw. erfolglosen Einschaltversuchen und
- dem Temperaturverlauf nach dem Einschalten.

Die Fuzzylogik ermöglicht auch aufgrund von schwankenden Eingabewerten eine dynamische Systemregelung und ist in der Lage automatisch die erfolgreichen und nicht erfolgreichen Regelvorgänge auszuwerten.

Der integrierte Regler regelt:
- **die Einschaltung der Umwälzpumpe -** dies geschieht durch Änderung des Drucks im Ablaufrohr (5), die mit dem Drucksensor (7) festgestellt wird, oder durch die Erkennung eines Strömungsimpulses,
- **die erforderlichen Durchflussmengen -** dies geschieht durch die Auswertung des Verhältnisses der Vor- und Rücklauftemperatur, die durch die Temperatursensoren (8) und (9) überwacht wird,
- **die Ausschaltung der Umwälzpumpe -** dies geschieht durch die Auswertung des Verhältnisses der Vor- und Rücklauftemperatur, die auch durch die Temperatursensoren (8) und (9) überwacht wird.

Der integrierte Regler (4) wird in die Umwälzpumpe (3) oder unmittelbar in ihrem räumlichen Umfeld eingebaut (integriert). Er führt die beschriebenen Regelvorgänge durch die Informationen der internen Sensoren (7), (8) und (9) aus, die in den Pumpenkörper selbst und in seiner unmittelbaren Nähe eingebaut werden.

Der automatische integrierte Regler wird lediglich nur mit einer Versorgungsspannung versehen und muss manuell nicht eingestellt werden.

### Die automatische Regelvorrichtung gemäß der Erfindung, wird folgenderweise definiert:

- Durch die Erfindung wird die Steuerung einer Umwälzpumpe aufgrund der Druck- und Temperatur - Änderungen geregelt.
- Die Regelvorgänge werden durch einen intelligenten integrierten Regler (4) durchgeführt.
- Die automatische Regelvorrichtung besteht
   - aus einem in die Umwälzpumpe (3) oder unmittelbar in ihrem räumlichen Umfeld eingebauten integrierten Regler (4),
   - aus einem internen Drucksensor (7), der im Ablaufrohr (5) zwischen Wärmesenke (1) und Wärmequelle (2) oder im Finlaufstutzen der Umwälzpumpe platziert wird,
   - aus einem internen Temperatursensor (8), der in der Nähe des Drucksensors (7) platziert wird und
   - aus einem zweitem internen Temperatursensor (9), der im Zulaufrohr (6) zwischen Wärmequelle (2) und Wärmesenke (1) platziert wird und sich auch in der unmittelbaren Nähe der Umwälzpumpe (3) befindet.
- Die Verkabelung der Sensoren (7), (8) und (9) minimiert sich auf Leitungen (71), (81) und (91) mit der Länge von wenigen cm.
- Der integrierte Regler (4) erkennt nach einem Lernprozess automatisch die optimalen betrieblichen Bedingungen und
- der integrierte Regler (4) regelt vollautomatisch aufgrund der Änderung der Zustandsgrößen des Wärmemediums den Betrieb der Umwälzpumpe (3).

Der von dem Drucksensor (7) aufgenommene Impuls einer Druckänderung, kann bei Bedarf durch einen mechanischen Schwellenwert - Verstärker (10), der Teil der vorliegenden Erfindung ist, verstärkt werden.

Die Zustandsgröße "Druckänderung" wird durch den Schwellenwert - Verstärker (10) mechanisch verstärkt. Dies ermöglicht es, die messtechnisch schwer zu erfassende Druckerhöhung zu erfassen bzw. das Einschaltsignal überhaupt zu erkennen.

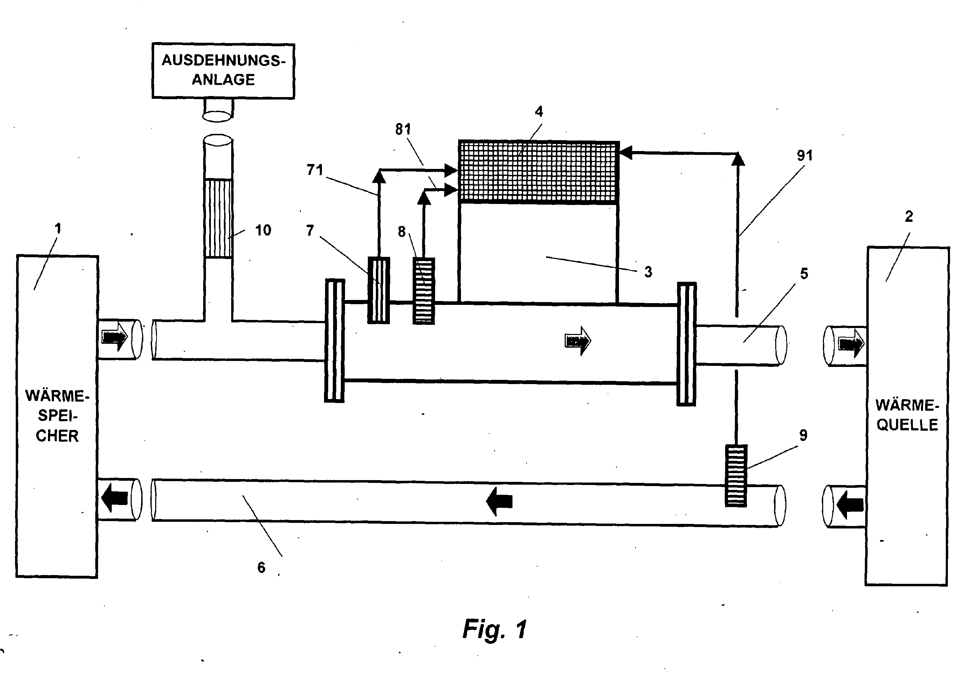

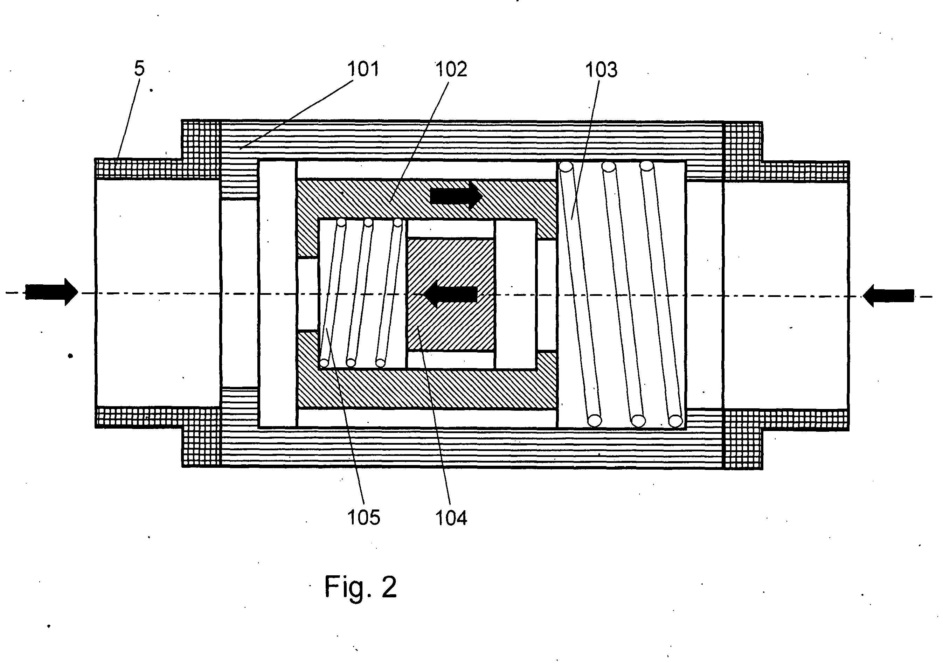

Der Schwellenwert - Verstärker (10) wurde für die vorliegende Erfindung entwickelt und seine Konstruktionsmerkmale sind aus der Fig.2 zu entnehmen. Der Schwellenwert-Verstärker (10) ist so konstruiert, dass er die Druck - Änderungen aus beiden Richtungen des Ablaufrohrs (5) aufnehmen und verstärken kann. Dies wird durch eine "Kolben-in-Kolben"-Lösung erreicht. Im Gehäuse (101) befindet sich ein Groß-Kolben (102), der mit einer Groß-Feder (103) im Gleichgewicht gehalten wird. Falls es im Ablaufrohr (5) wegen der Temperatur-Änderung in der Wärmequelle (2) zu einer Druck-Änderung kommt, wird die Groß-Feder (103) zusammengedrückt.

Bis zum Erreichen einer durch die Feder der Bauteile vorgegebenen Druckdifferenz, verhindert der Schwellenwert - Verstärker das Fließen der wärmetragenden Flüssigkeit von einer Seite des Schwellwertgebers zur anderen und ermöglicht dadurch die Erkennung einer messtechnisch verwertbaren Druckänderung. Die wärmetragende Flüssigkeit fließt durch den Schwellenwen-Verstärker (10) erst nach der Überschreitung des Schwellenwerts durch.

Im Groß-Kolben (102) befindet sich ein Klein-Kolben (104), der mit einer Klein-Feder (105) im Gleichgewicht gehalten wird. Falls es im Ablaufrohr (5) wegen der Temperatur-Änderung in der Wärmesenke (1) zu einer Druck-Änderung kommt, wird die Klein-Feder (105) zusammengedrückt. Die wärmetragende Flüssigkeit fließt, umgekehrt zum vorherigen Vorgang, durch den Schwellenwert-Verstärker (10) erst nach Überschreiten des Öffnungsdrucks durch.

Beide Impulse werden durch den Schwellenwert - Verstärker so verstärkt, dass sie durch den Drucksensor (7) aufgenommen und zur Steuerung des internen Reglers (4) benutzt werden können.

## Patentansprüche

1. Automatische Regelvorrichtung für Umwälzpumpen (3), die für den Transport eines wärme - oder kältetragenden Mediums zwischen einer Wärme- oder Kältequelle (2) und einer Wärme- oder Kältesenke (1) benutzt werden, mit einem in den Pumpenkörper oder unmittelbar im räumlichen Umfeld der Umwälzpumpe (3) eingebauten integrierten Regler (4), einem Drucksensor (7) und zwei Temperatursensoren (8) und (9), **dadurch gekennzeichnet, dass** der Regler (4) dazu ausgebildet ist, durch eine vom Drucksensor (7) als Folge einer Temperaturänderung der Wärme- oder Kältequelle (2) oder der Wärme- oder Kältesenke (1)erfasste Änderung des Druckniveaus zu erkennen und dieses Signal in entsprechende Steuerbefehle umzuwandeln.

2. Automatische Regelvorrichtung für Umwälzpumpen nach Anspruch 1, **dadurch gekennzeichnet, dass** der Regler (4) auf Basis von Fuzzylogik arbeitet.

3. Automatische Regelvorrichtung für Umwälzpumpen nach Anspruch 1 oder 2, **dadurch gekennzeichnet, dass** der Regler (4) die Regelung automatisch selbst lernend durchführt.

4. Automatische Regelvorrichtung für Umwälzpumpen nach einem der vorhergehenden Ansprüche, **dadurch gekennzeichnet, dass** der Drucksensor (7) und einer der beiden Temperatursensoren (8) im Ablaufrohr der Wärme- oder Kältesenke (5) und der zweite Temperatursensor (9) im Zulaufrohr (6) der Wärme- oder Kaltesenke (5) platziert sind

5. Automatische Regelvorrichtung für Umwälzpumpen nach einem der vorhergehenden Ansprüche, **dadurch gekennzeichnet, dass** der interne Drucksensor (7) und die internen Temperatursensoren (8) und (9) in einer solchen räumlichen Nähe der Umwälzpumpe (3) platziert sind, dass die interne Verkabelung (71) zwischen dem internen Regler (4) und den Sensoren (7, 8, 9) eine Länge von nur einigen cm aufweist.

6. Automatische Regelvorrichtung für Umwälzpumpen nach einem der vorhergehenden Ansprüche, **dadurch gekennzeichnet, dass** die Einschaltung der Umwälzpumpe (3) aufgrund einer vom Drucksensor (7) erfassten Druckänderung im Ablaufrohr (5) erfolgt.

7. Automatische Regelvorrichtung für Umwälzpumpen nach einem der Ansprüche 1 bis 4, **dadurch gekennzeichnet, dass** die Einschaltung der Umwälzpumpe (3) aufgrund einer Änderung des Drucks in der Rohrleitung, die einen Strömungsimpuls verursacht, der von einem Stromungssensor erfasst wird, erfolgt.

8. Automatische Regelvorrichtung für Umwälzpumpen nach einem der vorhergehenden Ansprüche, **dadurch gekennzeichnet, dass** nach dem Einschalten des internen Reglers (4), unter Berücksichtigung einer entsprechenden Wartezeit, die internen Sensoren (8) und (9) die Steuerfunktion übernehmen und je nach gewünschten Betriebsmodus (Zieltemperatur oder Temperaturdifferenz) Befehle im internen Regler (4) auslösen, durch die die Drehzahl der Umwälzpumpe (3) geregelt wird.

9. Automatische Regelvorrichtung für Umwälzpumpen nach einem der vorhergehenden Ansprüche, **dadurch gekennzeichnet, dass** die erforderlichen Durchflussmengen und die Ausschaltung der Umwälzpumpe durch Verhältnis der Vor- und Rücklauftemperatur, die durch die Temperatursensoren (8) und (9) überwacht wird, durchgeführt wird.

10. Automatische Regelvorrichtung für Umwälzpumpen nach einem der vorhergehenden Ansprüche, **dadurch gekennzeichnet, dass**, wenn eine Maximaltemperatur in der Wärmesenke (1) erreicht wird oder wenn aus der Wärmequelle (2) kein entsprechender Energieertrag mehr nutzbar ist, die Umwälzpumpe (3) von dem internen Regler (4) ausgeschaltet wird.

11. Automatische Regelvorrichtung für Umwälzpumpen nach einem der vorhergehenden Ansprüche, **dadurch gekennzeichnet, dass** die Zustandsgröße "Druckänderung" durch einen mechanischen Schwellenwert - Verstärker (10) verstärkt wird, der zur erleichterten messtechnischen Erfassung die Druckänderungen aus beiden Richtungen der Rohrleitung mechanisch verstärkt.

12. Automatische Regelvorrichtung für Umwälzpumpen nach Anspruch 11, **dadurch gekennzeichnet, dass** im Gehäuse des Schwellenwert-Verstärkers (101) ein Groß-Kolben (102)angeordnet ist, der mit einer Groß-Feder (103) im Gleichgewicht gehalten wird.

13. Automatische Regelvorrichtung für Umwälzpumpen nach Anspruch 11 und 12, **dadurch gekennzeichnet, dass** der Schwellenwertverstärker (10) bei einer Temperatur-Änderung in der Wärme- oder Kältequelle (2), die zu einer Druck-Änderung führt, den Durchfluss bis zu einer Druckdifferenz verhindert und erst nach Erreichen eines aufgrund der Konstruktion vorgegebenen Drucks ein Überströmen des Mediums stattfindet.

14. Automatische Regelvorrichtung für Umwälzpumpen nach einem der Ansprüche 11 bis 13, **dadurch gekennzeichnet, dass** Impulse aus beiden Richtungen durch den Schwellenwert-Verstärker (10) so verstärkt werden, dass sie durch den Drucksensor (7) aufgenommen und zur Steuerung des internen Reglers (4) nutzbar sind.

## Claims

1. An automatic control device for circulation pumps (3) which are used for conveying a heat- or cold-carrying medium between a source of heat or cold (2) and a heat or cold sink (1), comprising an integrate controller (4) incorporated in the pump body or in the immediate spatial surroundings of the circulation pump (3), a pressure sensor (7) and two temperature sensors (8) and (9), **characterized in that** the controller (4) is designed for perceiving a change in the pressure level detected by the pressure sensor (7) as a result of a change in the temperature of the source of heat or cold (2) or the heat or cold sink (1) and for converting said signal into appropriate control commands.

2. An automatic control device for circulation pumps according to claim 1, **characterized in that** the controller (4) operates on the basis of fuzzy logic.

3. An automatic control device for circulation pumps according to claim 1 or 2, **characterized in that** the controller (4) performs the control automatically and in a self-learning manner.

4. An automatic control device for circulation pumps according to any of the preceding claims, **characterized in that** the pressure sensor (7) and one of the two temperature sensors (8) are located in the discharge pipe of the heat or cold sink (5) and the second temperature sensor (9) is located in the supply pipe (6) of the heat or cold sink (5).

5. An automatic control device for circulation pumps according to any of the preceding claims, **characterized in that** the internal pressure sensor (7) and the internal temperature sensors (8) and (9) are located in such spatial proximity to the circulation pump (3) that the internal wiring (71) between the internal controller (4) and the sensors (7, 8, 9) has a length of only a few cm.

6. An automatic control device for circulation pumps according to any of the preceding claims, **characterized in that** the activation of the circulation pump (3) is effected as a result of a change in pressure in the discharge pipe (5) which is detected by the pressure sensor (7).

7. An automatic control device for circulation pumps according to any of claims 1 to 4, **characterized in that** the activation of the circulation pump (3) is effected as a result of a change in pressure in the pipeline, which change produces a flow impulse which is detected by a flow sensor.

8. An automatic control device for circulation pumps according to any of the preceding claims, **characterized in that**, upon activation of the internal controller (4) and taking into account an appropriate waiting time, the internal sensors (8) and (9) assume the control function and, depending on the desired operational mode (target temperature or temperature difference), trigger commands in the internal controller (4) via which the rotational speed of the circulation pump (3) is controlled.

9. An automatic control device for circulation pumps according to any of the preceding claims, **characterized in that** the required flow capacity rates and the deactivation of the circulation pump are effected via the ratio between starting and return temperatures as monitored by the temperature sensors (8) and (9).

10. An automatic control device for circulation pumps according to any of the preceding claims, **characterized in that** the circulation pump (3) is deactivated by the internal controller (4) if a maximum temperature is achieved in the heat sink (1) or if it is no longer possible to exploit an appropriate energy output from the source of heat (2).

11. An automatic control device for circulation pumps according to any of the preceding claims, **characterized in that** the state variable "change in pressure" is amplified by a mechanical threshold-value amplifier (10) which mechanically increases the changes in pressure from both directions of the pipeline in order to simplify the metrological detection.

12. An automatic control device for circulation pumps according to claim 11, **characterized in that** a large-sized piston (102) is arranged in the casing of the threshold-value amplifier (101), which large-sized piston is kept in balance by a large-sized spring (103).

13. An automatic control device for circulation pumps according to claims 11 and 12, **characterized in that**, in case of a change in temperature in the source of heat or cold (2) leading to a change in pressure, the threshold-value amplifier (10) prevents the flow up to a pressure difference and the medium is overflown only after achieving a pressure which is predetermined due to the design.

14. An automatic control device for circulation pumps according to claims 11 to 13, **characterized in that** impulses from both directions are amplified by the threshold-value amplifier (10) in such a way that they are recorded by the pressure sensor (7) and are usable for controlling the internal controller (4).

## Revendications

1. Dispositif de réglage automatique pour des pompes de recirculation (3) que l'on utilise pour le transport d'un fluide caloporteur ou frigorigène entre une source de chaleur ou une source de froid (2) et un dissipateur de chaleur ou un dissipateur de froid (1) avec un régulateur (4) encastré dans le corps de la pompe ou directement dans l'environnement spatial de la pompe de recirculation (3), avec un capteur de pression (7) et avec deux sondes thermiques (8) et (9), **caractérisé en ce que** le régulateur (4) est conçu pour identifier une modification détectée par le capteur de pression (7) en tant que conséquence d'une modification du niveau de pression de la source de chaleur ou de la source de froid (2) ou du dissipateur de chaleur ou de dissipateur de froid (1) et pour transformer ce signal en instructions de commande correspondantes.

2. Dispositif de réglage automatique pour des pompes à recirculation selon la revendication 1, **caractérisé en ce que** le régulateur (4) travaille sur la base d'une logique floue.

3. Dispositif de réglage automatique pour des pompes à recirculation selon la revendication 1 ou 2, **caractérisé en ce que** le régulateur (4) procède automatiquement au réglage, de façon auto-adaptative.

4. Dispositif de réglage automatique pour des pompes à recirculation selon l'une quelconque des revendications précédentes, **caractérisé en ce que** le capteur de pression (7) et l'une des deux sondes thermiques (8) sont placés dans le tuyau d'écoulement du dissipateur de chaleur ou du dissipateur de froid (5) et **en ce que** la deuxième sonde thermique (9) est placée dans le tuyau d'alimentation (6) du dissipateur de chaleur ou du dissipateur de froid (5).

5. Dispositif de réglage automatique pour des pompes à recirculation selon l'une quelconque des revendications précédentes, **caractérisé en ce que** le capteur de pression interne (7) et les sondes thermiques internes (8) et (9) sont placés à une distance spatiale telle par rapport à la pompe de recirculation (3) que le câblage interne (71) entre le régulateur interne (4) et les capteurs (7, 8, 9) n'a qu'une longueur de quelques centimètres.

6. Dispositif de réglage automatique pour des pompes à recirculation selon l'une quelconque des revendications précédentes, **caractérisé en ce que** la mise en route de la pompe à recirculation (3) est assurée sur la base d'une modification de la pression dans le tuyau d'écoulement (5) qui est détectée par le capteur de pression (7)

7. Dispositif de réglage automatique pour des pompes à recirculation selon l'une quelconque des revendications 1 à 4, **caractérisé en ce que** la mise en route de la pompe à recirculation (3) est assurée sur la base d'une modification de la pression de la tuyauterie, qui génère une impulsion d'écoulement qui est détectée par un capteur d'écoulement.

8. Dispositif de réglage automatique pour des pompes à recirculation selon l'une quelconque des revendications précédentes, **caractérisé en ce qu'**après la mise en route du régulateur interne (4), sous observation d'un temps d'attente correspondant, les capteurs internes (8) et (9) assurent la fonction de commande et en fonction du mode d'exploitation (température cible ou différence de température) déclenchent dans le régulateur interne (4) des instructions par l'intermédiaire desquelles la vitesse de rotation de la pompe de recirculation (3) se règle.

9. Dispositif de réglage automatique pour des pompes à recirculation selon l'une quelconque des revendications précédentes, **caractérisé en ce que** les débits nécessaires et la mise à l'arrêt de la pompe de recirculation sont assurés par le rapport entre le température dans le circuit aller et retour, qui est surveillé par les sondes thermiques (8) et (9).

10. Dispositif de réglage automatique pour des pompes à recirculation selon l'une quelconque des revendications précédentes, **caractérisé en ce que** lorsqu'une température maximale est atteinte dans le dissipateur de chaleur (1) ou si aucune introduction d'énergie n'est plus exploitable à partir de la source de chaleur (2), la pompe de recirculation (3) est mise à l'arrêt par le régulateur interne (4).

11. Dispositif de réglage automatique pour des pompes à recirculation selon l'une quelconque des revendications précédentes, **caractérisé en ce que** la dimension d'état "modification de pression" est amplifiée par une amplificateur mécanique de la valeur seuil (10), qui pour faciliter la détection relevant de la technique de mesure, amplifie les modifications de pression émanant des deux directions de la tuyauterie.

12. Dispositif de réglage automatique pour des pompes à recirculation selon la revendication 11, **caractérisé en ce que** dans le boîtier de l'amplificateur de valeur seuil (101) est disposé un piston de grandes dimensions (102), qui est maintenu en équilibre par un ressort de grandes dimensions (103).

13. Dispositif de réglage automatique pour des pompes à recirculation selon la revendication 11 et 12, **caractérisé en ce que** lors d'une modification de température dans la source de chaleur ou dans la source de froid (2), qui conduit à une modification de pression, l'amplificateur de valeur seuil (10) entrave le débit jusqu'à une pression différentielle et **en ce qu'**on assiste à un débordement du fluide seulement après atteinte de la pression prédéfinie du fait de la structure.

14. Dispositif de réglage automatique pour des pompes à recirculation selon l'une quelconque des revendications 11 à 13, **caractérisé en ce que** des impulsions à partir des deux directions sont amplifiées par l'amplificateur de valeurs seuils (10), de façon à pouvoir être enregistrées par le capteur de pression (7) et exploitées pour la commande dur régulateur interne (4).
